# EUROPEAN PATENT APPLICATION

(11) **EP 4 832 092 A1**
(43) Date of publication of application: **28.10.2026**
(21) Application number: 24927735.1
(22) Date of filing: 04.03.2024
(51) Int. Cl.: H01M 4/36, H01M 4/62, H01M 10/0525

(54) **SECONDARY BATTERY AND PREPARATION METHOD THEREFOR, AND ELECTRIC DEVICE**

(71) Applicant: Contemporary Amperex Technology Co., Limited, Ningde, Fujian 352100 (CN)
(72) Inventor: LIN, Kui, Ningde, Fujian 352100 (CN); LIU, Huanji, Ningde, Fujian 352100 (CN); XU, Xiaofu, Ningde, Fujian 352100 (CN); CHEN, Xiao, Ningde, Fujian 352100 (CN); SUN, Xin, Ningde, Fujian 352100 (CN); YE, Yonghuang, Ningde, Fujian 352100 (CN)
(74) Representative: Lorenz Seidler Gossel Part. mbB
(86) International application number: PCT/CN2024/079972
(87) International publication number: WO 2025/184783

(57) **Abstract**

The present application provides a secondary battery and a preparation method therefor, and an electric device. The secondary battery comprises a positive electrode sheet, the positive electrode sheet comprises a positive electrode active material and an additive, the positive electrode active material comprises a base material and a coating layer at least partially covering the base material, the coating layer comprises a lithium-supplementing material or a reducing material, the additive comprises a lithium-supplementing material or a reducing material, and the coating layer and the additive do not simultaneously comprise a lithium-supplementing material and do not simultaneously comprise a reducing material. The secondary battery has excellent cycle performance and long service life.

## Description

### TECHNICAL FIELD

The present application relates to the technical field of secondary batteries, and in particular, to a secondary battery and a preparation method therefor, and an electrical apparatus.

### BACKGROUND

Lithium-ion batteries (LIB), as a type of secondary battery, have the characteristics such as high energy density, long service life, energy saving and environmental protection. However, during initial charging and discharging process of a lithium-ion battery, an electrolyte forms a solid electrolyte interphase (SEI) film on a negative electrode surface. The formation of the SEI film consumes a significant amount of active lithium ions. Furthermore, during charge-discharge cycles of the battery, the cracking and fragmentation of positive electrode active material particles as well as the thickening and repair of the SEI film all consume active lithium ions. This is prone to a decline in cycle capacity of the battery, affecting its service life.

### SUMMARY OF THE INVENTION

In view of the above issues, an object of the present application is to provide a secondary battery, aiming to solve the technical problem of how to improve cycling performance of the secondary battery and prolong service life of the battery.

According to a first aspect, the present application provides a secondary battery. The secondary battery includes a positive electrode plate, the positive electrode plate includes a positive electrode active material and an additive, the positive electrode active material includes a matrix material and a coating layer at least partially covering the matrix material, the coating layer includes a lithium-supplementing material or a reducing material, the additive includes a lithium-supplementing material or a reducing material, and the coating layer and the additive do not simultaneously include a lithium-supplementing material and do not simultaneously include a reducing material.

In the secondary battery of the present application, the lithium-supplementing material is present in the coating layer of the matrix material while the reducing material is present in the additive of the positive electrode plate; alternatively, the reducing material is present in the coating layer of the matrix material while the lithium-supplementing material is present in the additive of the positive electrode plate. The lithium-supplementing material and the reducing material can form point-to-surface contact, which can expand the contact area between them, thereby improving the extent of reaction between the lithium-supplementing material and the reducing material and improving lithium-supplementing efficiency of the lithium-supplementing material. Moreover, the lithium-supplementing material or the reducing material is present in the coating layer, so that the conductive network of the lithium-supplementing material and the reducing material can be improved based on conductivity of the matrix material, thereby providing more electron transport pathways, improving the extent of reaction between the lithium-supplementing material and the reducing material, reducing sheet resistance of the electrode plate, and improving dynamic performance and cycling performance of the battery.

In summary, with respect to the secondary battery of the present application, the contact area between the lithium-supplementing material and the reducing material is expanded, the extent of reaction of the two is increased, the lithium-supplementing material plays a role in lithium-supplementing as far as possible, the lithium-supplementing efficiency of the lithium-supplementing material is improved, and a great amount of active lithium is provided for lithium-supplementing during cycling, enabling the battery to have superior number of cycles and have long service life.

In any embodiment, a mass ratio of the lithium-supplementing material to the reducing material is 0.5-50.

In any embodiment, a mass ratio of the lithium-supplementing material to the reducing material is 1-20.

The mass ratio of the lithium-supplementing material to the reducing material is within an appropriate range. This allows a full reaction between the lithium-supplementing material and the reducing material to improve the lithium-supplementing efficiency while avoiding excessive residual lithium-supplementing material and/or reducing material that could degrade the cycling performance and energy density of the battery.

In any embodiment, based on mass of the matrix material, the mass fraction of the lithium-supplementing material is 0.5-20%.

In any embodiment, based on mass of the matrix material, the mass fraction of the lithium-supplementing material is 1-10%.

The mass fraction of the lithium-supplementing material is within an appropriate range. This ensures that the lithium-supplementing material may play a role in lithium-supplementing fully, thereby improving cycling performance. Moreover, this avoids excessive lithium-supplementing material that could adversely affect the rate performance, available capacity, and safety performance of the battery.

In any embodiment, based on the mass of the matrix material, the mass fraction of the reducing material is 0.01-10%.

In any embodiment, based on the mass of the matrix material, the mass fraction of the reducing material is 0.02-5%.

The mass fraction of the reducing material is within an appropriate range. This ensures that under action of the sufficient reducing material, the lithium-supplementing material and the reducing material react fully, and the lithium-supplementing material plays a role in lithium-supplementing to the utmost extent, thereby improving cycling performance of the battery. Moreover, this avoids excessive reducing material that could adversely affect the available capacity and safety performance.

In any embodiment, the lithium-supplementing material includes one or more of lithium nickelate, lithium-rich lithium nickelate, lithium ferrite, lithium-rich lithium ferrite, lithium oxalate, lithium oxalate, lithium metasilicate, lithium orthosilicate, lithium carbonate, lithium sulfate, lithium hydroxide, lithium phosphate, lithium oxide, lithium peroxide, lithium borate, or lithium metaborate.

In any embodiment, the lithium-supplementing material includes one or more of lithium-rich lithium nickelate, lithium metasilicate, lithium orthosilicate, lithium sulfate, lithium hydroxide, lithium borate, lithium metaborate, and lithium phosphate.

The aforementioned lithium-supplementing material has high irreversible capacity, good lithium-supplementing effect, good stability in air, and good compatibility with existing battery production processes, facilitating industrial production.

In any embodiment, the reducing material includes one or more of elemental selenium, a metallic compound of selenium, elemental sulfur, a metallic compound of sulfur, elemental phosphorus, a metallic compound of phosphorus, elemental boron, a metallic compound of boron, elemental tellurium, a metallic compound of tellurium, elemental antimony, a metallic compound of antimony, elemental bismuth, a metallic compound of bismuth, and selenium disulfide.

In any embodiment, the reducing material includes one or more of elemental selenium, a metallic compound of selenium, elemental sulfur, a metallic compound of sulfur, and selenium disulfide.

The aforementioned reducing material may chemically react with a lithium-supplementing material, lowering decomposition potential of the lithium-supplementing material, achieving low-potential lithium-supplementing, improving the decomposition efficiency and utilization rate of the lithium-supplementing material, increasing capacity retention rate of the battery, and prolonging life of the battery.

In any embodiment, the lithium-supplementing material has a lithium-supplementing efficiency greater than or equal to 85%.

In any embodiment, the lithium-supplementing material has a lithium-supplementing efficiency of 90-100%.

According to a second aspect, the present application provides a preparation method for a secondary battery. The preparation method includes the following steps:
applying a positive electrode slurry containing a positive electrode active material and an additive to obtain a positive electrode plate; and
assembling a negative electrode plate, a separator, an electrolyte, and the positive electrode plate to obtain a secondary battery;
where the positive electrode active material includes a matrix material and a coating layer at least partially covering the matrix material;
where the coating layer includes a lithium-supplementing material or a reducing material, the additive includes a lithium-supplementing material or a reducing material, and the coating layer and the additive do not simultaneously include a lithium-supplementing material and do not simultaneously include a reducing material.

The secondary battery with excellent cycling performance can be prepared using the above preparation method.

In any embodiment, a method of preparing the positive electrode active material specifically includes:
subjecting a raw material for matrix material and a lithium-supplementing material precursor to a hydrothermal reaction to obtain a composite precursor; and
subjecting the composite precursor and a lithium source to a first sintering treatment to obtain a positive electrode active material;
where the positive electrode active material includes a matrix material and a coating layer at least partially covering the matrix material, and the coating layer includes a lithium-supplementing material.

The positive electrode active material with the coating layer containing the lithium-supplementing material can be prepared by the hydrothermal reaction and sintering treatment, where the lithium-supplementing material in the coating layer reacts with the additive containing the reducing material in the positive electrode plate, to perform efficient lithium-supplementing, thereby increasing the number of cycles of the battery and prolonging service life of the battery.

In any embodiment, reaction temperature for the hydrothermal reaction is 120-220°C; and/or, reaction duration for the hydrothermal reaction is 8-24 hours.

The appropriate reaction temperature and/or reaction duration for the hydrothermal reaction enable the lithium-supplementing material precursor to form a coating layer on the raw material for matrix material, and the two have good bonding force. After the subsequent sintering treatment, the lithium-supplementing material forms a structurally complete coating layer on the surface of the matrix material.

In any embodiment, temperature for the first sintering treatment is 600-1000°C; and/or, duration for the first sintering treatment is 4-24 hours.

The appropriate temperature and/or duration for the first sintering allows the composite precursor to react fully with the lithium source, obtaining a positive electrode active material with stable structure and high phase purity.

In any embodiment, a method of preparing the positive electrode active material specifically includes:
subjecting a mixture containing a matrix material, a lithium-supplementing material precursor and a lithium source to a second sintering treatment to obtain a positive electrode active material;
where the positive electrode active material includes a matrix material and a coating layer at least partially covering the matrix material, and the coating layer includes a lithium-supplementing material.

The positive electrode active material with the coating layer containing the lithium-supplementing material can be prepared by the one-step sintering treatment, where the lithium-supplementing material in the coating layer of the matrix material reacts with the additive containing the reducing material in the positive electrode plate, to perform efficient lithium-supplementing, thereby increasing the number of cycles of the battery and prolonging service life of the battery.

A molar ratio of the lithium-supplementing material precursor to the lithium source is within an appropriate range. This is conducive to forming the coating layer containing the lithium-supplementing material of appropriate mass, thereby improving the material basis for a long-cycle battery.

In any embodiment, temperature for the second sintering treatment is 600-900°C; and/or, duration for the second sintering treatment is 4-24 hours.

The appropriate temperature and/or duration for the second sintering allows the lithium-supplementing material precursor to react fully with the lithium source, obtaining a coating layer with stable structure and high phase purity.

In any embodiment, a method of preparing the positive electrode active material specifically includes:
subjecting the matrix material and reducing material vapor to vapor-phase coating to obtain a positive electrode active material;
where the positive electrode active material includes a matrix material and a coating layer at least partially covering the matrix material, and the coating layer includes a reducing material.

By the vapor-phase coating treatment, the surface of the matrix material can be uniformly coated with the reducing material, to obtain the positive electrode active material with the coating layer containing the reducing material, where the reducing material in the coating layer reacts with the additive containing the lithium-supplementing material in the positive electrode plate, to perform efficient lithium-supplementing, thereby increasing the number of cycles of the battery and prolonging service life of the battery.

In any embodiment, a mass ratio of the matrix material to the reducing material vapor is 10:1000.

The mass ratio of the matrix material to the reducing material vapor is within an appropriate range, so that the coating layer contains sufficient reducing material to react with the lithium-supplementing material, achieving the purpose of reducing decomposition potential of the lithium-supplementing material, while avoiding the excessive thickness of the coating layer that could adversely affect lithium-ion transport to affect dynamic performance of the battery.

According to a third aspect, the present application provides an electrical apparatus, including a secondary battery obtained by preparation methods in the first aspect and the second aspect.

### BRIEF DESCRIPTION OF DRAWINGS

Fig. 1 is a schematic diagram of a positive electrode active material and an additive according to an embodiment of the present application;
Fig. 2 is a schematic diagram of a secondary battery according to an embodiment of the present application;
Fig. 3 is an exploded view of a secondary battery according to an embodiment of the present application shown in Fig. 2;
Fig. 4 is a schematic diagram of a battery module according to an embodiment of the present application;
Fig. 5 is a schematic diagram of a battery pack according to an embodiment of the present application;
Fig. 6 is an exploded view of a battery pack according to an embodiment of the present application shown in Fig. 5; and
Fig. 7 is a schematic view of an electrical apparatus in which a secondary battery is used as a power source according to an embodiment of the present application.

Reference signs:
1 battery pack; 2 upper box; 3 lower box; 4 battery module; 5 secondary battery; 51 case; 52 electrode assembly; 53 cover plate; 6 positive electrode active material; 61 matrix material; 62 coating layer; 7 additive.

### DETAILED DESCRIPTION

Hereinafter, embodiments of a secondary battery and a preparation method therefor and an electrical apparatus of the present application are described in detail and specifically disclosed with reference to the drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit may be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), which means that the method may comprise steps (a) and (b) performed in order, or may comprise steps (b) and (a) performed in order. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

All the active lithium in a lithium-ion battery is provided by a positive electrode active material. However, during initial charging process of the lithium-ion battery, the formation of a solid electrolyte interphase (SEI) film on a negative electrode surface and other chemical side reactions occurring during subsequent charge-discharge cycles consume active lithium ions, degrading cycling performance of the battery. In order to improve cycling performance of the lithium-ion battery, the industry commonly employs the solution of adding a positive electrode lithium-supplementing material in a positive electrode of the battery. The common positive electrode lithium-supplementing material typically includes a binary lithium-containing compound, a ternary lithium-containing compound, or organic lithium salts. However, most positive electrode lithium-supplementing materials with high lithium capacity also have high decomposition voltage, which may affect the cycling performance and safety performance of batteries. To address the issue of high decomposition potential of the positive electrode lithium-supplementing materials, both lithium-supplementing material and reducing material are often added to the positive electrode plate as an additive. However, both the reducing material and the lithium-supplementing material are in a granular form, with point-to-point contact between them. Furthermore, a conductive agent and a positive electrode active material within the electrode plate isolate the two materials, preventing sufficient contact between them. Consequently, the two materials cannot react fully, and the lithium-supplementing material fails to play a role in lithium-supplementing function, resulting in low lithium-supplementing efficiency. To address this technical problem, the industry also employs the solution of coating the surface of the lithium-supplementing material with the reducing material to form a core-shell lithium-supplementing composition using the lithium-supplementing material as a core structure and the reducing material as a shell structure. However, common lithium-supplementing materials and reducing materials exhibit poor electronic conductivity, the lithium-supplementing material of the core structure fails to form an effective electronic pathway for electron transfer, resulting in poor dynamic performance of the battery and poor lithium-supplementing efficiency of the lithium-supplementing material. Furthermore, since the lithium-supplementing material of the core structure cannot be effectively utilized, the reducing material of the shell structure undergoes irreversible side reactions with the electrolyte or positive electrode active material. This degrades the reversible capacity of the battery and worsens cycling performance of the battery.

### [Secondary battery]

The present application provides a secondary battery. The secondary battery includes a positive electrode plate, the positive electrode plate includes a positive electrode active material and an additive, the positive electrode active material includes a matrix material and a coating layer at least partially covering the matrix material, the coating layer includes a lithium-supplementing material or a reducing material, the additive includes a lithium-supplementing material or a reducing material, and the coating layer and the additive do not simultaneously include a lithium-supplementing material and do not simultaneously include a reducing material.

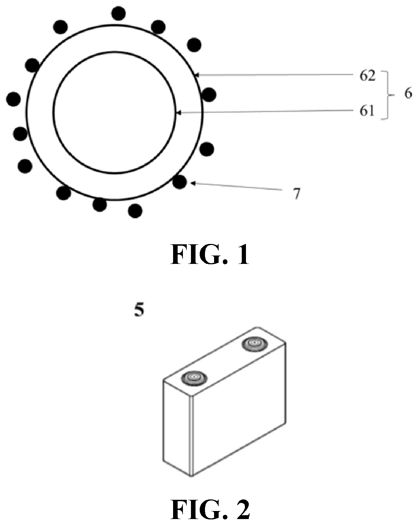

As shown in Fig. 1, the positive electrode plate includes a positive electrode active material 6 and an additive 7, the positive electrode active material 6 includes a matrix material 61 and a coating layer 62 at least partially covering the matrix material 61.

In some embodiments, the positive electrode active material includes a matrix material and a coating layer at least partially covering the matrix material, the coating layer includes a lithium-supplementing material, and the additive includes a reducing material.

In some embodiments, the positive electrode active material includes a matrix material and a coating layer at least partially covering the matrix material, the coating layer includes a reducing material, and the additive includes a lithium-supplementing material.

In the secondary battery of the present application, when the lithium-supplementing material is present in the coating layer of the matrix material and the reducing material is present in an additive form, or the reducing material is present in the coating material of the matrix material and the lithium-supplementing material is present in an additive form, as compared to the conventional approach where both the lithium-supplementing material and the reducing material are present in an additive form and the two are in point-to-point contact or out of direct contact, the lithium-supplementing material and the reducing material of the present application can form point-to-surface contact, which can expand the contact area between the lithium-supplementing material and the reducing material, increase the extent of reaction between the lithium-supplementing material and the reducing material, and improve the lithium-supplementing efficiency of the lithium-supplementing material. Moreover, the presence of the lithium-supplementing material or reducing material in the coating layer can improve the conductive network of the lithium-supplementing material and the reducing materials based on conductivity of the matrix material, providing more electron transport pathways, reducing sheet resistance of the electrode plate, and improving dynamic performance of the battery. Without introducing additional carbon layers or conductive agents, based on the positional relationship among the lithium-supplementing material, the reducing material and the matrix material, an excellent conductive network is constructed to improve dynamic performance of the battery, enabling the lithium-supplementing material to play a role in lithium-supplementing fully to improve the lithium-supplementing efficiency. Furthermore, the excellent conductive network of the electrode plate and the improvement in contact site between the lithium-supplementing material and the reducing material enable electron transfer of the lithium-supplementing material, so that the lithium-supplementing material can participate in an electrochemical reaction fully. Under the action of the reducing material, decomposition reaction may occur at a low potential, sufficient active lithium ions can be released to supplement those lost during cycles, thereby achieving the effect of lithium-supplementing, reducing the likelihood of side reactions between the reducing material and the positive electrode active material or electrolyte, and improving cycling performance of the battery.

In summary, with respect to the secondary battery of the present application, the lithium-supplementing material plays a role in lithium-supplementing as far as possible, the lithium-supplementing efficiency of the lithium-supplementing material is improved, and sufficient active lithium is provided to supplement lithium ions lost during cycles, enabling the battery to have superior number of cycles and have long service life.

In some embodiments, a mass ratio of the lithium-supplementing material to the reducing material is 0.5-50. In some embodiments, the mass ratio of the lithium-supplementing material to the reducing material may optionally be 0.5, 1, 5, 10, 15, 20, 25, 30, 35, 40, 45, 50, or in the range between any two of these values.

In some embodiments, a mass ratio of the lithium-supplementing material to the reducing material is 1-20. In some embodiments, the mass ratio of the lithium-supplementing material to the reducing material may optionally be 1, 5, 10, 15, 20 or in the range between any two of these values.

The mass ratio of the lithium-supplementing material to the reducing material is within an appropriate range. This allows a full reaction between the lithium-supplementing material and the reducing material to improve the lithium-supplementing efficiency while avoiding excessive residual lithium-supplementing material and reducing material that could degrade the cycling performance and energy density of the battery.

In some embodiments, based on mass of the matrix material, the mass fraction of the lithium-supplementing material is 0.5-20%. In some embodiments, based on the mass of the matrix material, the mass fraction of the lithium-supplementing material may optionally be 0.5%, 1%, 2%, 3%, 4%, 5%, 6%, 7%, 8%, 9%, 10%, 11%, 12%, 13%, 14%, 15%, 16%, 17%, 18%, 19%, 20%, or in the range between any two of these values.

In some embodiments, based on the mass of the matrix material, the mass fraction of the lithium-supplementing material is 1-10%. In some embodiments, based on the mass of the matrix material, the mass fraction of the lithium-supplementing material may optionally be 1%, 2%, 3%, 4%, 5%, 6%, 7%, 8%, 9%, 10% or in the range between any two of these values.

The mass fraction of the lithium-supplementing material is within an appropriate range. This ensures that the lithium-supplementing material may play a role in lithium-supplementing fully, thereby improving cycling performance. Moreover, this avoids excessive lithium-supplementing material that could adversely affect the rate performance, available capacity, and safety performance of the battery.

In some embodiments, based on the mass of the matrix material, the mass fraction of the reducing material is 0.01-10%. In some embodiments, based on the mass of the matrix material, the mass fraction of the reducing material may optionally be 0.01%, 0.05%, 1%, 2%, 3%, 4%, 5%, 6%, 7%, 8%, 9%, 10% or in the range between any two of these values.

In some embodiments, based on the mass of the matrix material, the mass fraction of the reducing material is 0.02-5%. In some embodiments, based on the mass of the matrix material, the mass fraction of the reducing material may optionally be 0.02%, 0.05%, 1%, 2%, 3%, 4%, 5% or in the range between any two of these values.

The mass fraction of the reducing material is within an appropriate range. This ensures that under action of the sufficient reducing material, the lithium-supplementing material and the reducing material react fully, and the lithium-supplementing material plays a role in lithium-supplementing to the utmost extent, thereby improving cycling performance of the battery. Moreover, this avoids excessive reducing material that could adversely affect the available capacity and safety performance.

In some embodiments, the lithium-supplementing material includes one or more of lithium nickelate, lithium-rich lithium nickelate, lithium ferrite, lithium-rich lithium ferrite, lithium oxalate, lithium oxalate, lithium metasilicate, lithium orthosilicate, lithium carbonate, lithium sulfate, lithium hydroxide, lithium phosphate, lithium oxide, lithium peroxide, lithium borate, or lithium metaborate.

The aforementioned lithium-supplementing material has high irreversible capacity, good lithium-supplementing effect, good stability in air, and good compatibility with existing battery production processes, facilitating industrial production.

In some embodiments, the lithium-supplementing material includes one or more of lithium-rich lithium nickelate, lithium metasilicate, lithium orthosilicate, lithium sulfate, lithium hydroxide, lithium borate, lithium metaborate, and lithium phosphate.

The appropriate lithium-supplementing material is used with a reducing material, so that decomposition potential of the lithium-supplementing material can be reduced while the lithium-supplementing material can play a role in lithium-supplementing fully. Moreover, reaction products of the lithium-supplementing material and the reducing material do not contain gases such as oxygen, carbon dioxide or nitrogen,which reduces the possibility of gas production in the batteryand reduces the impact of gases such as oxygen, carbon dioxide or nitrogen on the safety performance or cycling performance of the battery. In addition, decomposition products of the lithium-supplementing material includes silicon oxide, nickel oxide, lithium oxide, boron oxide or lithium sulfate, which exhibits good ion conductivity. This is conducive to improving ionic conductivity of the electrode plate and improving the rate performance and cycling performance of the battery.

In some embodiments, the lithium-supplementing material includes one or two of lithium metasilicate and lithium orthosilicate.

The low decomposition potential of lithium metasilicate or lithium orthosilicate enables the high-capacity lithium-supplementing material to have large application space. The decomposition products include silicon dioxide and lithium sulfate, which exhibit excellent ionic conductivity. This improves ionic conduction of the positive electrode plate and improves the rate performance and cycling performance of the battery.

In some embodiments, the reducing material includes one or more of elemental selenium, a metallic compound of selenium, elemental sulfur, a metallic compound of sulfur, elemental phosphorus, a metallic compound of phosphorus, elemental boron, a metallic compound of boron, elemental tellurium, a metallic compound of tellurium, elemental antimony, a metallic compound of antimony, elemental bismuth, a metallic compound of bismuth, and selenium disulfide.

Herein, the term "a metallic compound of selenium" refers to the compound composed of selenium and a metallic elements, in which selenium exhibits a negative valence state. The metallic compound of selenium includes, but is not limited to, lithium selenide, sodium selenide, or calcium selenide.

Herein, the term "a metallic compound of sulfur" refers to the compound composed of sulfur and a metallic element, in which sulfur exhibits a negative valence state. The metallic compound of sulfur includes, but is not limited to, calcium sulfide, lithium sulfide, sodium sulfide, zinc sulfide, or iron sulfide.

Herein, the term "a metallic compound of phosphorus" refers to the compound composed of phosphorus and a metallic element, in which phosphorus exhibits a negative valence state. The metallic compound of phosphorus includes, but is not limited to, lithium phosphide, sodium phosphide, iron phosphide, calcium phosphide, zinc phosphide, aluminum phosphide, or copper phosphide.

Herein, the term "a non-transition metallic compound of boron" refers to the compound composed of boron and a non-transition metallic element, in which boron exhibits a negative valence state. The non-transition metallic compound of boron includes, but is not limited to, calcium hexaboride.

Herein, the term "a non-transition metal compound of tellurium" refers to the compound composed of tellurium and a non-transition metallic element, in which tellurium exhibits a negative valence state. The non-transition metallic compound of tellurium includes, but is not limited to, lithium telluride and sodium telluride.

Herein, the term "a metallic compound of antimony " refers to the compound composed of antimony and a metallic element, in which antimony exhibits a negative valence state. The metallic compound of antimony includes, but is not limited to, lithium antimonide, sodium antimonide, or indium antimonide.

Herein, the term "a metallic compound of bismuth " refers to the compound composed of bismuth and a metallic element, in which bismuth exhibits a negative valence state. The metallic compound of bismuth includes, but is not limited to, sodium bismuth.

The aforementioned reducing material may chemically react with a lithium-supplementing material, lowering decomposition potential of the lithium-supplementing material, achieving low-potential lithium-supplementing, improving the decomposition efficiency and utilization rate of the lithium-supplementing material, increasing capacity retention rate of the battery, and prolonging life of the battery.

In some embodiments, the reducing material includes one or more of elemental selenium, a non-transition metallic compound of selenium, elemental sulfur, a non-transition metallic compound of sulfur, elemental phosphorus, a non-transition metallic compound of phosphorus, elemental boron, a non-transition metallic compound of boron, elemental tellurium, a non-transition metallic compound of tellurium, elemental antimony, a non-transition metallic compound of antimony, elemental bismuth, a non-transition metallic compound of bismuth, and selenium disulfide.

Herein, the term "a non-transition metallic compound of selenium" refers to the compound composed of selenium and a non-transition metallic element, in which selenium exhibits a negative valence state. The metallic compound of selenium includes, but is not limited to, lithium selenide, sodium selenide, or calcium selenide.

Herein, the term "a non-transition metallic compound of sulfur" refers to the compound composed of sulfur and a non-transition metallic element, in which sulfur exhibits a negative valence state. The non-transition metallic compound of sulfur includes, but is not limited to, calcium sulfide, lithium sulfide or sodium sulfide.

Herein, the term "a non-transition metallic compound of phosphorus" refers to the compound composed of phosphorus and a non-transition metallic element, in which phosphorus exhibits a negative valence state. The non-transition metallic compound of phosphorus includes, but is not limited to, lithium phosphide, sodium phosphide, iron phosphide, calcium phosphide, and aluminum phosphide.

Herein, the term "a non-transition metallic compound of boron" refers to the compound composed of boron and a non-transition metallic element, in which boron exhibits a negative valence state. The non-transition metallic compound of boron includes, but is not limited to, calcium hexaboride.

Herein, the term "a non-transition metal compound of tellurium" refers to the compound composed of tellurium and a non-transition metallic element, in which tellurium exhibits a negative valence state. The non-transition metallic compound of tellurium includes, but is not limited to, lithium telluride and sodium telluride.

Herein, the term "a non-transition compound of antimony " refers to the compound composed of antimony and a non-transition metallic element, in which antimony exhibits a negative valence state. The non-transition metallic compound of antimony includes, but is not limited to, lithium antimonide, sodium antimonide, or indium antimonide.

Herein, the term "a non-transition metallic compound of bismuth " refers to the compound composed of bismuth and a non-transition metallic element, in which bismuth exhibits a negative valence state. The non-transition metallic compound of bismuth includes, but is not limited to, sodium bismuth.

The aforementioned reducing material does not contain transition metallic elements, thereby reducing the impact of catalytic oxidation reactions between the transition metallic elements and the electrolyte on the cycling or safety performance of the battery.

In some embodiments, the reducing material includes one or more of elemental selenium, elemental sulfur, elemental phosphorus, elemental boron, elemental tellurium, elemental antimony, elemental bismuth, and selenium disulfide.

The aforementioned raw material contains elementary substance, so that the impact of catalytic oxidation reactions between the transition metallic elements and the electrolyte on the cycling or safety performance of the battery can be reduced. Moreover, the reducing material containing the elementary substance has lower molecular weight, and accordingly, the same mass of reducing agent can react with a greater quantity of lithium-supplementing material, increasing the mass utilization of the reducing agent.

In some embodiments, the reducing material includes one or more of elemental selenium, a metallic compound of selenium, elemental sulfur, a metallic compound of sulfur, and selenium disulfide.

The aforementioned reducing material has high reducibility. Even with low addition amount, the reducing material can reduce the decomposition potential of the lithium-supplementing material, so that the lithium-supplementing material can play a role in lithium-supplementing fully, thereby improving the lithium-supplementing efficiency of the lithium-supplementing material and increasing the number of cycles of the battery.

In some embodiments, the lithium-supplementing material has a lithium-supplementing efficiency greater than or equal to 85%, optionally in the range of 90-100%. In some embodiments, the lithium-supplementing efficiency of the lithium-supplementing material may optionally be 85%, 87%, 90%, 94%, 95%, 97%, 98%, 99%, 100% or in the range between any two of these values.

The lithium-supplementing material has high lithium-supplementing efficiency, improving cycling performance of the battery while prolonging service life of the battery.

In some embodiments, the matrix material includes a lithium-containing phosphate of olivine structure, a lithium transition metal oxide, and modified compounds thereof. However, the present application is not limited to these materials, and the matrix materials may be used individually or in combination with two or more materials. Examples of lithium transition metal oxides may include, but are not limited to, at least one of the group consisting of a lithium-cobalt oxide (e.g., LiCoO₂), a lithium-nickel oxide (e.g., LiNiO₂), a lithium-manganese oxide (e.g., LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (e.g., LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), a lithium-nickel-cobalt-aluminum oxide (e.g., LiNi_{0.85}Co_{0.15}Al_{0.05}O₂), a modified compound thereof, and the like. Examples of lithium-containing phosphates of olivine structure may include, but are not limited to, at least one of the group consisting of lithium iron phosphate (e.g., LiFePO₄ (also abbreviated as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the matrix material includes lithium iron phosphate or a modified form of lithium iron phosphate, and the modified form includes one or more of compounds obtained by doping modification and coating modification.

Some embodiments of the present application provide a preparation method for a secondary battery. The preparation method includes the following steps:
applying a positive electrode slurry containing a positive electrode active material and an additive to obtain a positive electrode plate; and
assembling a negative electrode plate, a separator, an electrolyte, and the positive electrode plate to obtain a secondary battery;
where the positive electrode active material includes a matrix material and a coating layer at least partially covering the matrix material;
where the coating layer includes a lithium-supplementing material or a reducing material, the additive includes a lithium-supplementing material or a reducing material, and the coating layer and the additive do not simultaneously include a lithium-supplementing material and do not simultaneously include a reducing material.

In some implementations, a negative electrode, a separator, and an electrolyte may be conventionally provided in the art and may be selected by those skilled in the art according to actual needs.

In some embodiments, the preparation method for a secondary battery includes the following steps:
applying a positive electrode slurry containing a positive electrode active material and an additive to obtain a positive electrode plate; and
assembling a negative electrode plate, a separator, an electrolyte, and the positive electrode plate to obtain a secondary battery;
where the positive electrode active material includes a matrix material and a coating layer at least partially covering the matrix material;
where the coating layer includes a lithium-supplementing material, and the additive includes a reducing material.

In some implementations, the applying of the positive electrode slurry is a conventional step in the art and may be selected by those skilled in the art according to actual needs.

In some embodiments, the preparation method for a secondary battery includes the following steps:
applying a positive electrode slurry containing a positive electrode active material and an additive to obtain a positive electrode plate; and
assembling a negative electrode plate, a separator, an electrolyte, and the positive electrode plate to obtain a secondary battery;
where the positive electrode active material includes a matrix material and a coating layer at least partially covering the matrix material;
where the coating layer includes a reducing material, and the additive includes a lithium-supplementing material.

The secondary battery with excellent cycling performance can be prepared using the above preparation method.

In some embodiments, a method of preparing the positive electrode active material specifically includes:
subjecting a raw material for matrix material and a lithium-supplementing material precursor to a hydrothermal reaction to obtain a composite precursor; and
subjecting the composite precursor and a lithium source to a first sintering treatment to obtain a positive electrode active material;
where the positive electrode active material includes a matrix material and a coating layer at least partially covering the matrix material, and the coating layer includes a lithium-supplementing material.

In some embodiments, the raw material for matrix material includes the raw material for synthesizing a matrix material precursor or includes a matrix material precursor. For example, if the matrix material is lithium iron phosphate, the raw material for matrix material includes a phosphorus source and an iron source, or iron phosphate; or if the matrix material is lithium nickel cobalt manganese oxide, the raw material for matrix material includes a nickel source, a cobalt source, and a manganese source, or nickel cobalt manganese hydroxide. The raw material for matrix material may be selected according to the type of matrix material.

In some embodiments, the lithium-supplementing material precursor includes the raw material for synthesizing a lithium-supplementing material, for example, when the lithium-supplementing material is lithium metasilicate, the lithium-supplementing material precursor is ethyl orthosilicate or silicon dioxide; when the lithium-supplementing material is lithium orthosilicate, the lithium-supplementing material precursor is ethyl orthosilicate or silicon dioxide; when the lithium-supplementing material is lithium-rich lithium ferrite, the lithium-supplementing material precursor is iron oxide; the lithium-supplementing material precursor is lithium borate, the lithium-supplementing material precursor is boron oxide; the lithium-supplementing material precursor is lithium metaborate, and the lithium-supplementing material precursor is boron oxide; the precursor may be selected correspondingly based on the type of lithium-supplementing material.

In some embodiments, the lithium source is a conventional choice in the art, including but not limited to lithium hydroxide monohydrate, lithium carbonate, lithium hydroxide, lithium phosphate, or lithium dihydrogen phosphate.

In some embodiments, the addition amount of the raw material for matrix material, the lithium-supplementing material precursor or the lithium source depends on the respective mass fraction of the matrix material and the lithium-supplementing material in a target product positive electrode active material.

The positive electrode active material with the coating layer containing the lithium-supplementing material can be prepared by the hydrothermal reaction and sintering treatment, where the lithium-supplementing material in the coating layer reacts with the additive containing the reducing material in the positive electrode plate, to perform efficient lithium-supplementing, thereby increasing the number of cycles of the battery and prolonging service life of the battery.

In some embodiments, reaction temperature for the hydrothermal reaction is 120-220°C. In some embodiments, the reaction temperature for the hydrothermal reaction may optionally be 120°C, 140°C, 160°C, 180°C, 200°C, 220°C or in the range between any two of these values.

In some embodiments, reaction duration for the hydrothermal reaction is 8-24 hours. In some embodiments, the reaction duration for the hydrothermal reaction may optionally be 8 hours, 10 hours, 12 hours, 14 hours, 16 hours, 18 hours, 20 hours, 22 hours, 24 hours or in the range between any two of these values.

The appropriate reaction temperature and/or reaction duration for the hydrothermal reaction enable the lithium-supplementing material precursor to form a coating layer on the raw material for matrix material, and the two have good bonding force. After the subsequent sintering treatment, the lithium-supplementing material forms a structurally complete coating layer on the surface of the matrix material.

In some embodiments, temperature for the first sintering treatment is 600-1000°C. In some embodiments, the temperature for the first sintering treatment may optionally be 600°C, 700°C, 800°C, 900°C, 1000°C or in the range between any two of these values.

In some embodiments, duration for the first sintering treatment is 4-24 hours. In some embodiments, the duration for the first sintering treatment may optionally be 4 hours, 6 hours, 8 hours, 10 hours, 12 hours, 14 hours, 16 hours, 18 hours, 20 hours, 22 hours, 24 hours or in the range between any two of these values.

The appropriate temperature and/or duration for the first sintering allows the composite precursor to react fully with the lithium source, obtaining a positive electrode active material with stable structure and high phase purity.

In some embodiments, a method of preparing the positive electrode active material specifically includes:
subjecting a mixture containing a matrix material, a lithium-supplementing material precursor and a lithium source to a sintering treatment to obtain a positive electrode active material;
where the positive electrode active material includes a matrix material and a coating layer at least partially covering the matrix material, and the coating layer includes a lithium-supplementing material.

In some embodiments, the matrix material includes lithium iron phosphate or a modified form of lithium iron phosphate, and the modified form includes one or more of compounds obtained by doping modification and coating modification.

The positive electrode active material with the coating layer containing the lithium-supplementing material can be prepared by the one-step sintering treatment, where the lithium-supplementing material in the coating layer reacts with the additive containing the reducing material in the positive electrode plate, to perform efficient lithium-supplementing, thereby increasing the number of cycles of the battery and prolonging service life of the battery.

In some embodiments, temperature for the second sintering treatment is 600-900°C. In some embodiments, the temperature for the second sintering treatment may optionally be 600°C, 700°C, 800°C, 900°C or in the range between any two of these values.

In some embodiments, duration for the second sintering treatment is 4-24 hours. In some embodiments, the duration for the second sintering treatment may optionally be 4 hours, 6 hours, 8 hours, 10 hours, 12 hours, 14 hours, 16 hours, 18 hours, 20 hours, 22 hours, 24 hours or in the range between any two of these values.

The appropriate temperature and/or duration for the second sintering allows the lithium-supplementing material precursor to react fully with the lithium source, obtaining a coating layer with stable structure and high phase purity.

In some embodiments, a method of preparing the positive electrode active material specifically includes:
subjecting the matrix material and reducing material vapor to vapor-phase coating to obtain a positive electrode active material;
where the positive electrode active material includes a matrix material and a coating layer at least partially covering the matrix material, and the coating layer includes a reducing material.

In some embodiments, a method of preparing the positive electrode active material specifically includes:
processing a reducing material into reducing material vapor; and
subjecting the matrix material and the reducing material vapor to vapor-phase coating to obtain a positive electrode active material;
where the positive electrode active material includes a matrix material and a coating layer at least partially covering the matrix material, and the coating layer includes a reducing material.

In some embodiments, the step of processing a reducing material into reducing material vapor may be carried out by conventional means in the art, including but not limited to heat treatment.

In some embodiments, a method of preparing the positive electrode active material specifically includes:
mechanically ball-milling a matrix material and a reducing material to obtain a positive electrode active material; and
converting the reducing material into reducing material vapor during the mechanical ball-milling process, to perform vapor-phase coating on the matrix material;
where the positive electrode active material includes a matrix material and a coating layer at least partially covering the matrix material, and the coating layer includes a reducing material.

By the vapor-phase coating treatment, the surface of the matrix material can be uniformly coated with the reducing material, to obtain the positive electrode active material with the coating layer containing the reducing material, where the reducing material in the coating layer reacts with the additive containing the lithium-supplementing material in the positive electrode plate, to perform efficient lithium-supplementing, thereby increasing the number of cycles of the battery and prolonging service life of the battery.

In some embodiments, a mass ratio of the matrix material to the reducing material is 10:1-1000:1. In some embodiments, the mass ratio of the matrix material to the reducing material may optionally be 10:1, 50:1, 100:1, 200:1, 300:1, 400:1, 500:1, 600:1, 700:1, 800:1, 900:1, 1000:1 or in the range between any two of these values.

The mass ratio of the matrix material to the reducing material vapor is within an appropriate range, so that the coating layer contains sufficient reducing material to react with the lithium-supplementing material, achieving the purpose of reducing decomposition potential of the lithium-supplementing material, while avoiding the excessive thickness of the coating layer that could adversely affect lithium-ion transport to affect dynamic performance of the battery.

In some embodiments, the secondary battery includes a lithium-ion battery. Specifically, the secondary battery includes a positive electrode plate, a negative electrode plate, and a separator sandwiched between the positive electrode plate and the negative electrode plate. During charging and discharging process of the battery, active ions are intercalated and deintercalated back and forth between the positive and negative electrode plates. The electrolyte plays a role in conducting ions between the positive electrode plate and negative electrode plate. The separator is arranged between the positive electrode plate and the negative electrode plate, and mainly functions to prevent a short circuit between the positive electrode and the negative electrode while allowing ions to pass through.

In some embodiments, the positive electrode plate includes a positive electrode current collector and a positive electrode film layer provided on at least one surface of the positive electrode current collector.

In some embodiments, the positive electrode film layer includes a positive electrode active material and an additive.

In some embodiments, the positive electrode current collector may be a metal foil or a composite current collector. For example, an aluminum foil may be used as the metal foil. The composite current collector may include a polymer material substrate layer and a metal layer formed on at least one surface of the polymer material substrate layer. The composite current collector may be formed by forming a metal material (e.g., aluminum, aluminum alloy, nickel, nickel alloy, titanium, titanium alloy, silver, and silver alloy) on a polymer material substrate, such as a substrate of polypropylene (PP), polyethylene terephthalate (PET), polybutylene terephthalate (PBT), polystyrene (PS), or polyethylene (PE).

In some embodiments, the positive electrode plate further includes a conductive agent. The conductive agent may include at least one of the group consisting of superconducting carbon, acetylene black, carbon black, Ketjen black, carbon dot, carbon nanotube, graphene, and carbon nanofiber.

In some embodiments, the positive electrode plate further includes a binder. The binder may include at least one of the group consisting of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode plate may be prepared by the steps of dispersing the positive electrode active material in the above embodiments, the additive, binder and conductive agent in the above embodiments, and any other components in a solvent (e.g., N-methylpyrrolidone) to form a positive electrode slurry; and applying the positive electrode slurry on the positive electrode current collector, drying, and cold pressing, to obtain the positive electrode plate.

In some embodiments, the negative electrode plate includes a negative electrode current collector and a negative electrode film layer arranged on at least one surface of the negative electrode current collector, and the negative electrode film layer includes a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, as the metal foil, a copper foil can be used. The composite current collector may include a polymer base layer and a metal layer formed on at least one surface of the polymer substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. By way of example, the negative electrode active material may include at least one of the following materials: artificial graphite, natural graphite, soft carbon, hard carbon, a silicon-based material, a tin-based material, lithium titanate, etc. The silicon-based material may be selected from at least one of the group consisting of elemental silicon, a silicon-oxygen compound, a silicon-carbon composite, a silicon-nitrogen composite, or a silicon alloy. The tin-based material may be selected from at least one of the group consisting of elemental tin, a tin-oxygen compound, and a tin alloy. However, the present application is not limited to these materials. Other traditional materials that can be used as negative electrode active materials for batteries may also be used. These negative electrode active materials may be used alone or in a combination of two or more thereof.

In some embodiments, the negative electrode film layer further optionally includes a binder. The binder may be selected from at least one of the group consisting of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of the group consisting of superconducting carbon, acetylene black, carbon black, Ketjen black, carbon dot, carbon nanotube, graphene, and carbon nanofiber.

In some embodiments, the negative electrode film layer further optionally includes other adjuvants, for example, a thickener (such as sodium carboxymethyl cellulose (CMC-Na)).

In some embodiments, the negative electrode plate may be prepared by the steps of dispersing the above components, such as the negative electrode active material, the conductive agent, the binder and any other component, for preparing the negative electrode plate in a solvent (such as deionized water) to form a negative electrode slurry; and coating the negative electrode slurry on the negative electrode current collector, and performing drying and cold pressing processes to obtain the negative electrode plate.

In some embodiments, the electrolyte plays a role in conducting ions between the positive electrode plate and negative electrode plate. The present application has no specific limitation on the type of the electrolyte, which can be selected according to requirements. For example, the electrolyte may be liquid, gelled, or all solid.

In some embodiments, an electrolyte solution is used as the electrolyte. The electrolyte solution contains an electrolyte salt and a solvent.

In some embodiments, the electrolyte salt may be selected from at least one of the group consisting of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of the group consisting of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally includes an additive. For example, the additives may further include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

In some embodiments, the secondary battery further includes a separator. The type of the separator is not particularly limited in the present application, and any well-known separator with a porous structure having good chemical stability and mechanical stability can be selected.

In some embodiments, the material of the separator may be selected from at least one of the group consisting of glass fibers, non-woven fabric, polyethylene, polypropylene, and polyvinylidene fluoride. The separator may be either a single-layer thin film or a multilayer composite thin film without special limitations. When the separator is a multilayer composite thin film, the materials of the layers may be the same or different without special limitations.

In some embodiments, the positive electrode plate, the negative electrode plate, and the separator may be made into an electrode assembly by a winding process or a lamination process.

In some embodiments, the secondary battery may include an outer package. The outer package can be used for encapsulating the above electrode assembly and electrolyte.

In some embodiments, the outer package of the secondary battery may be a hard shell, such as a hard plastic shell, an aluminum shell, or a steel shell. The outer package of the secondary battery may also be a soft package, such as a pouch-type soft package. The material of the soft package may be plastic, and examples of the plastic may include polypropylene, polybutylene terephthalate, polybutylene succinate, and the like.

In some embodiments, the positive electrode plate, the negative electrode plate, and the separator may be made into an electrode assembly by a winding process or a lamination process.

In some embodiments, the secondary battery may include an outer package. The outer package can be used for encapsulating the above electrode assembly and electrolyte.

In some embodiments, the outer package of the secondary battery may be a hard shell, such as a hard plastic shell, an aluminum shell, or a steel shell. The outer package of the secondary battery may also be a soft package, such as a pouch-type soft package. The material of the soft package may be plastic, and examples of the plastic may include polypropylene, polybutylene terephthalate, polybutylene succinate, and the like.

A shape of the secondary battery is not particularly limited in the present application, and the secondary battery may be a cylinder, a square, or any other shape. For example, Fig. 2 shows an example of a secondary battery 5 having a square structure.

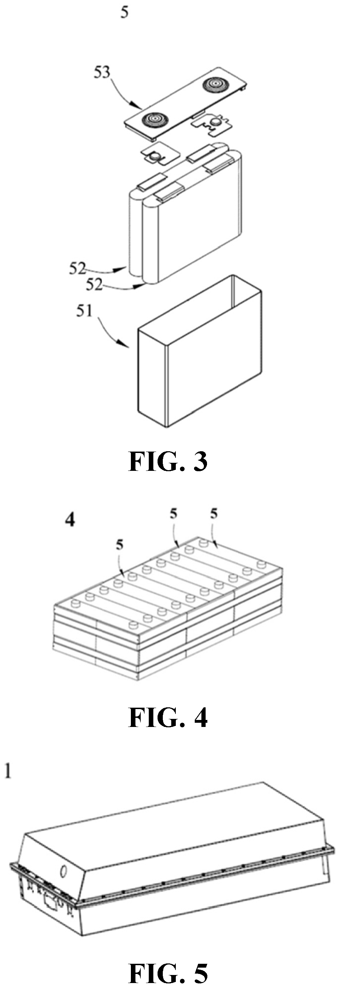

In some embodiments, referring to Fig. 3, the outer package may include a case 51 and a cover plate 53. Here, the case 51 can include a bottom plate and a side plate connected to the bottom plate, with the bottom plate and the side plate enclosing to form an accommodating cavity. The case 51 has an opening in communication with the accommodating cavity, and the cover plate 53 may cover the opening to close the accommodating cavity. The positive electrode plate, the negative electrode plate and the separator may be formed into an electrode assembly 52 by a winding process or a stacking process. The electrode assembly 52 is encapsulated in the accommodating cavity. The electrode assembly 52 is impregnated with the electrolyte solution. The number of electrode assemblies 52 included in the secondary battery 5 may be one or more, and may be selected by those skilled in the art according to specific actual requirements.

In some embodiments, the secondary battery may be assembled into a battery module, the number of the secondary batteries included in the battery module may be one or more, and the specific number may be selected by those skilled in the art according to the application and capacity of the battery module.

Fig. 4 is a battery module 4 as an example. Referring to Fig. 4, in the battery module 4, a plurality of secondary batteries 5 can be sequentially arranged in a length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 is accommodated.

In some embodiments, the above battery module may be assembled into a battery pack, the number of the battery modules included in the battery pack may be one or more, and the specific number may be selected by those skilled in the art according to the application and capacity of the battery pack.

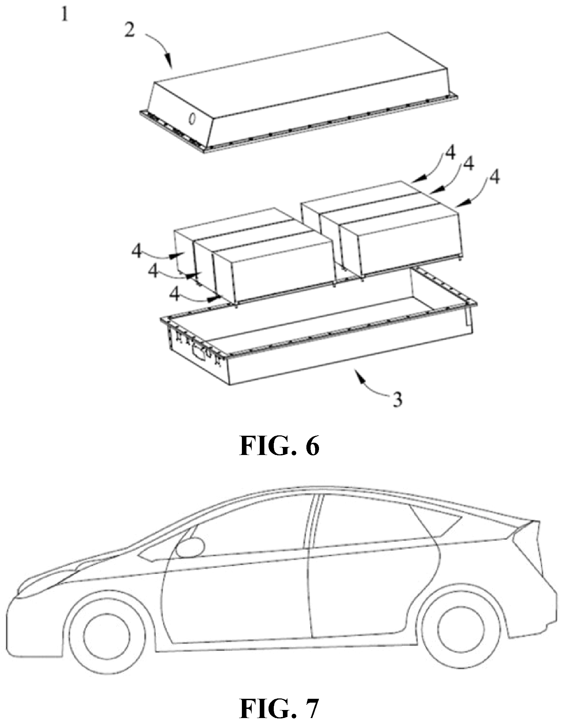

Fig. 5 and Fig. 6 are a battery pack 1 as an example. Referring to Fig. 5 and Fig. 6, the battery pack 1 may include a battery box and a plurality of battery modules 4 arranged in the battery box. The battery box includes an upper box body 2 and a lower box body 3. The upper box body 2 can cover the lower box body 3 to form enclosed space for accommodating the battery modules 4. The plurality of battery modules 4 may be arranged in the battery box in any manner.

In addition, the present application further provides an electrical apparatus. The electrical apparatus includes at least one of the secondary battery, battery module and battery pack provided in the present application. The secondary battery, the battery module, or the battery pack may be used as a power source for the electrical apparatus, and may also be used as an energy storage unit for the electrical apparatus. The electrical apparatus may include, but is not limited to, a mobile device (such as a mobile phone, and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc.

For the electrical apparatus, the secondary battery, the battery module, or the battery pack may be selected according to its use requirements.

Fig. 7 is an example of an electrical apparatus. The electrical apparatus is an all-electric vehicle, a hybrid electric vehicle, a plug-in hybrid electric vehicle, or the like. To satisfy the need of the electrical apparatus for a high power and high energy density of secondary batteries, a battery pack or a battery module can be used.

As another example, the apparatus may be a mobile phone, a tablet, a laptop, etc. The apparatus is generally required to be light and thin, and may use a secondary battery as a power source.

### EXAMPLES

Examples of the present application will be described below. The Examples described below are illustrative and only used to explain the present application, and cannot be construed as limiting the present application. In Examples in which no specific technologies or conditions are specified, technologies or conditions described in the literature in the art or product specifications are followed. Where manufacturers are not specified, the reagents or instruments used are conventional products and are commercially available.

### I. Preparation method

### Example 1

### 1) Preparation of positive electrode plate

100g of ferrous oxalate, 91.66g of ammonium dihydrogen phosphate, and 8.82g of ethyl orthosilicate were mixed and dispersed in an ethanol solution, and a hydrothermal reaction was performed at 180°C for 12 hours.

The post-reaction solution was centrifuged to obtain a composite precursor, the composite precursor was mixed with 33.05g of lithium hydroxide monohydrate and dispersed in an ethanol solution, followed by drying, and sintering at 800°C for 12 hours in a tube furnace under a nitrogen atmosphere to obtain lithium iron phosphate coated with lithium metasilicate, where based on the mass of lithium iron phosphate, the mass fraction of lithium metasilicate was 3.445%.

95.2g of lithium iron phosphate coated with lithium metasilicate, 0.8g of elemental sulfur as a reducing material, 2g of conductive carbon (SP), and 2g of polyvinylidene fluoride as a binder were dissolved in a solvent of N-methylpyrrolidone (NMP), and mixed well under sufficient stirring to obtain a positive electrode slurry, and the positive electrode slurry was then applied onto a positive electrode current collector aluminum foil, followed by drying at 100°C, cold pressing, and slitting to obtain a positive electrode plate.

### 2) Preparation of negative electrode plate

Graphite as an active material, acetylene black as a conductive agent, styrene-butadiene rubber (SBR) as a binder, and sodium carboxymethyl cellulose (CMC) as a thickener were fully stirred and uniformly mixed in an appropriate amount of deionized water solvent system based on a weight ratio of 96.5%:0.7%:1.8%:1% to obtain a negative electrode slurry, and the negative electrode slurry was applied on a Cu foil, followed by drying, cold pressing, and slitting to obtain a negative electrode plate.

### 3) Separator

Polyethylene porous polymer film was used as a separator.

### 4) Preparation of electrolyte

Ethylene carbonate (EC), methyl ethyl carbonate (EMC), and diethyl carbonate (DEC) were mixed in a volume ratio of 1:1:1; and then LiPF₆ was uniformly dissolved in the resulting solution to obtain an electrolyte, where LiPF₆ had a concentration of 1 mol/L.

### 6) Preparation of battery

The positive electrode plate, the separator, and the negative electrode plate were stacked in order and wound to obtain a battery cell. The battery cell was mounted in an outer package, the electrolyte was then added, followed by processes such as packaging, standing, formation and aging to obtain a secondary battery.

### Example 2

Compared to Example 1, Example 2 differs in the adjustment on the method of preparing the positive electrode plate, specifically as follows:
0.87g of elemental sulfur was treated at 155°C to produce sulfur vapor, the sulfur vapor was diffused onto the surface of 100g of lithium iron phosphate, uniformly coating the surface of lithium iron phosphate with elemental sulfur in a vapor form to obtain lithium iron phosphate coated with elemental sulfur, where based on the mass of lithium iron phosphate, the mass fraction of the sulfur coating layer was 0.87%.

The lithium iron phosphate coated with elemental sulfur, lithium metasilicate, conductive carbon (SP), and a binder were mixed in a mass ratio of 92.8%:3.2%:2%:2% in a solvent of N-methylpyrrolidone (NMP), were mixed well under sufficient stirring to obtain a positive electrode film layer slurry, the positive electrode film layer slurry was then applied onto a positive electrode current collector aluminum foil, following by drying at 100°C, cold pressing, and slitting to obtain a positive electrode plate.

### Example 3

Compared to Example 1, Example 3 differs in the adjustment on the method of preparing the positive electrode plate, specifically as follows:
100g of lithium iron phosphate and 0.87g of elemental sulfur were mixed and then put into a ball mill for ball milling, where the revolution speed of the ball mill was set to 500 rpm and the ball milling time was 4 hours; during ball milling, the surface of lithium iron phosphate was uniformly coated with elemental sulfur in a vapor form, to obtain lithium iron phosphate coated with elemental sulfur, where based on the mass of lithium iron phosphate, the mass fraction of the sulfur coating layer was 0.87%.

The lithium iron phosphate coated with elemental sulfur, lithium metasilicate, conductive carbon (SP), and a binder were mixed in a mass ratio of 92.8%:3.2%:2%:2% in a solvent of N-methylpyrrolidone (NMP), were mixed well under sufficient stirring to obtain a positive electrode film layer slurry, the positive electrode film layer slurry was then applied onto a positive electrode current collector aluminum foil, following by drying at 100°C, cold pressing, and slitting to obtain a positive electrode plate.

### Example 4

Compared to Example 1, Example 4 differs in the adjustment on the method of preparing the positive electrode plate, specifically as follows:
100g of lithium iron phosphate material was dispersed in a mixed organic solvent of ethanol and water, 6g of ethyl orthosilicate and 4.846g of lithium hydroxide monohydrate were then added, followed by drying, and sintering at 800°C for 12 hours in a tube furnace under a nitrogen atmosphere to obtain a positive electrode active material of lithium iron phosphate coated with lithium orthosilicate, where based on the mass of lithium iron phosphate, the mass fraction of lithium orthosilicate was 3.45%.

95.2g of lithium iron phosphate coated with lithium orthosilicate, 0.8g of elemental sulfur as a reducing material, 2g of conductive carbon (SP), and 2g of binder were dissolved in a solvent of N-methylpyrrolidone (NMP), and mixed well under sufficient stirring to obtain a positive electrode slurry, and the positive electrode slurry was then applied onto a positive electrode current collector aluminum foil, followed by drying at 100°C, cold pressing, and slitting to obtain a positive electrode plate.

### Example 5

Compared to Example 4, Example 5 differs in the adjustment on the method of preparing the positive electrode plate, specifically as follows:
100g of lithium iron phosphate material was dispersed in a mixed organic solvent of ethanol and water, 1.51g of boron oxide and 5.457g of lithium hydroxide monohydrate were then added, followed by drying, and sintering at 800°C for 12 hours in a tube furnace under a nitrogen atmosphere to obtain a positive electrode active material of lithium iron phosphate coated with lithium borate, where based on the mass of lithium iron phosphate, the mass fraction of lithium borate was 3.45%.

95.2g of lithium iron phosphate coated with lithium borate, 0.8g of elemental phosphorus as a reducing material, 2g of conductive carbon (SP), and 2g of binder were dissolved in a solvent of N-methylpyrrolidone (NMP), and mixed well under sufficient stirring to obtain a positive electrode slurry, and the positive electrode slurry was then applied onto a positive electrode current collector aluminum foil, followed by drying at 100°C, cold pressing, and slitting to obtain a positive electrode plate.

### Example 6

Compared to Example 1, Example 6 differs in the adjustment on the method of preparing the positive electrode plate, specifically as follows:
100g of ferrous oxalate, 91.66g of ammonium dihydrogen phosphate, and 2g of iron oxide were mixed and dispersed in an ethanol solution, and a hydrothermal reaction was performed at 180°C for 12 hours.

The post-reaction solution was centrifuged to obtain a product, the resulting product was mixed with 34.41g of lithium hydroxide monohydrate and dispersed in an ethanol solution, followed by drying, and sintering at 800°C for 12 hours in a tube furnace under a nitrogen atmosphere, to obtain a positive electrode active material of lithium iron phosphate coated with lithium-rich lithium ferrite, where based on the mass of lithium iron phosphate, the mass fraction of lithium-rich lithium ferrite was 3.53%.

The lithium iron phosphate coated with lithium-rich lithium ferrite, elemental sulfur as a reducing material, conductive carbon (SP), and a binder were mixed in a mass ratio of 95.2%:0.8%:2%:2% in a solvent of N-methylpyrrolidone (NMP), were mixed well under sufficient stirring to obtain a positive electrode slurry, the positive electrode slurry was then applied onto a positive electrode current collector aluminum foil, following by drying at 100°C, cold pressing, and slitting to obtain a positive electrode plate.

### Example 7-10

Compared to Example 1, Examples 7 to 10 differ in replacing the additive with elemental selenium, selenium disulfide, elemental antimony, or calcium sulfide. Specific parameters are detailed in Table 1.

### Example 11

Compared to Example 4, Example 11 differs in replacing the additive with elemental tellurium. Specific parameters are detailed in Table 1.

### Comparative Example 1

Compared to Example 1, Comparative Example 1 differs in the adjustment on the method of preparing the positive electrode plate, specifically as follows:
Lithium iron phosphate, conductive carbon (SP), and a binder were mixed in a mass ratio of 96%:2%:2% in a solvent of N-methylpyrrolidone (NMP), were mixed well under sufficient stirring to obtain a positive electrode film layer slurry, the positive electrode film layer slurry was then applied onto a positive electrode current collector aluminum foil, following by drying at 100°C, cold pressing, and slitting to obtain a positive electrode plate.

### Comparative Example 2

Compared to Example 1, Comparative Example 2 differs in the adjustment on the method of preparing the positive electrode plate, specifically as follows:
96g of lithium iron phosphate coated with lithium metasilicate, which was prepared in Example 1, 2g of conductive carbon (SP), and 2g of binder were dissolved in a solvent of N-methylpyrrolidone (NMP), and mixed well under sufficient stirring to obtain a positive electrode slurry, and the positive electrode slurry was then coated onto a positive electrode current collector aluminum foil, followed by drying at 100°C, cold pressing, and slitting to obtain a positive electrode plate.

### Comparative Example 3

Compared to Example 1, Comparative Example 3 differs in the adjustment on the method of preparing the positive electrode plate, specifically as follows:
92g of lithium iron phosphate, 3.2g of lithium metasilicate, 0.8g of elemental sulfur, 2g of conductive carbon (SP), and 2g of binder were dissolved in a solvent of N-methylpyrrolidone (NMP), and mixed well under sufficient stirring to obtain a positive electrode slurry, and the positive electrode slurry was then coated onto a positive electrode current collector aluminum foil, followed by drying at 100°C, cold pressing, and slitting to obtain a positive electrode plate.

### Comparative Example 4

Compared to Example 1, Comparative Example 4 differs in the adjustment on the method of preparing the positive electrode plate, specifically as follows:
Lithium metasilicate and elemental sulfur were mixed in a mass ratio of 8:2, then mechanically ball-milled to obtain a sulfur-coated lithium metasilicate material.

92g of lithium iron phosphate, 4g of sulfur-coated lithium metasilicate material, 2g of conductive carbon (SP), and 2g of binder were dissolved in a solvent of N-methylpyrrolidone (NMP), and mixed well under sufficient stirring to obtain a positive electrode slurry, and the positive electrode slurry was then applied onto a positive electrode current collector aluminum foil, followed by drying at 100°C, cold pressing, and slitting to obtain a positive electrode plate.

### II. Test methods

### 1. Number of cycles of battery

Secondary batteries prepared in Examples and Comparative Examples each were charged at a constant current of 0.5C until a charge cutoff voltage was 4.0V, and then were charged at a constant voltage until the current was ≤ 0.05C, followed by standing for 5 min. After that, the secondary batteries were discharged at a constant current of 0.33C until a discharge cutoff voltage was 2V, followed by standing for 5 min. This was a first charge-discharge cycle. A second cycle began by reducing a charging voltage to 3.8V while keeping all other parameters unchanged. The batteries were subjected to a cyclic charge-discharge test using this method until their capacity was degraded to 80%. The number of cycles at this point was cycle life of each battery at 25°C.

### 2. Sheet resistance of electrode plate

A dried electrode plate was cut at the left, center and right, and cut into small discs each of a diameter of 10 mm. The small discs were placed at an appropriate position of a "probe" of an electrode plate resistance measuring instrument produced by Yuanneng Technology after the power supply of the electrode plate resistance measuring instrument was turned on, followed by pushing a "start" button and reading the value after the reading display was stable. Each small disc was tested at two positions, and an average of six measurements was calculated as sheet resistance of the electrode plate.

### 3. lithium-supplementing efficiency of lithium-supplementing material

Lithium-ion batteries in Examples and Comparative Examples each were charged to 4.5V at a rate of 0.05C at 25°C, and their charge capacity C1 was recorded, where mass of the lithium-supplementing material in the positive electrode film layer was denoted as m0, and mass of the matrix material was denoted as m1.

The lithium-ion battery in Comparative Example 1 was used as the blank control, its charge capacity tested under the above test conditions was denoted as C2, mass of the matrix material in the positive electrode film layer in Comparative Example 1 was denoted as m2, and accordingly gram capacity of the matrix material was B = C2/m2.

The actual extracted gram capacity of the lithium-supplementing material was A1 = (C1 - B ×m₁) /m₀, where the theoretical gram capacity of the lithium-supplementing material was denoted as A0. lithium-supplementing efficiency of lithium-supplementing material = actual extracted capacity of lithium-supplementing material / theoretical gram capacity of lithium-supplementing material = A1 / A0 × 100%.

### 4. Upper limit of decomposition voltage of lithium-supplementing material

At 25°C, batteries in Examples and Comparative Examples each were charged to 4.5V at a constant current of 0.05 and then charged to 0.04C at a constant voltage of 4.5V. The lithium-supplementing efficiency during this process was calculated. A potential corresponding to the lithium-supplementing efficiency reaching 100% was regarded as an upper limit of decomposition voltage of the lithium-supplementing material.

### 5. Gas production of battery

A battery cell was immersed in silicone oil for testing, with test temperature controlled at 25°C using a constant-temperature water bath method, followed by measuring mass (Mx) of the battery cell, and calculating the volume change (Vx) based on Archimedes' principle to obtain gas production. At 25°C, batteries in Examples and Comparative Examples each were charged at a constant current of 0.05C to 4.5V, and then charged at a constant voltage of 4.5V to 0.05. The volume change (Vx) was recorded as a function of time and voltage, and accordingly the formation gas production per unit capacity at the cutoff voltage was obtained.

### III. Analysis of testing results of Examples and Comparative Examples

Secondary batteries in Examples and Comparative Examples are each prepared by the above methods, and measured for various parameters. The results are shown in tables below.

**Table 1**

| No. | Coating layer | Additive | Upper limit of decomposition potential of lithium-supplementing material /V | lithium-supplementing efficiency of lithium-supplementing material | Number of cycles of battery |
|---|---|---|---|---|---|
| Example 1 | Lithium metasilicate | Elemental sulfur | 4.000 | 100% | 6000 |
| Example 2 | Elemental sulfur | Lithium metasilicate | 4.050 | 97.0% | 5800 |
| Example 3 | Elemental sulfur | Lithium metasilicate | 4.100 | 94.0% | 5350 |
| Example 4 | Lithium orthosilicate | Elemental sulfur | 4.030 | 98.0% | 5850 |
| Example 5 | Lithium borate | Elemental phosphorus | 4.080 | 95.0% | 5400 |
| Example 6 | Lithium-rich lithium ferrite | Elemental sulfur | 4.040 | 97.5% | 5850 |
| Example 7 | Lithium metasilicate | Elemental selenium | 4.070 | 96.0% | 5600 |
| Example 8 | Lithium metasilicate | Selenium disulfide | 4.060 | 96.5% | 5700 |
| Example 9 | Lithium metasilicate | Elemental antimony | 4.075 | 95.1% | 5400 |
| Example 10 | Lithium metasilicate | Calcium sulfide | 4.065 | 96.3% | 5660 |
| Example 11 | Lithium orthosilicate | Elemental tellurium | 4.090 | 94.5% | 5300 |
| Comparative Example 1 | / | / | / | / | 3000 |
| Comparative Example 2 | Lithium metasilicate | / | / | 0% | 2800 |
| Comparative Example 3 | / | Lithium metasilicate + elemental sulfur | 4.500 | 20.0% | 3300 |

As shown in Table 1 above, the secondary batteries in Examples 1-11 of the present application each include a positive electrode plate; the positive electrode plate includes a positive electrode active material and an additive, where the positive electrode active material includes a lithium iron phosphate matrix material and a coating layer partially covering the lithium iron phosphate matrix material, the coating layer includes lithium metasilicate, lithium-rich lithium ferrite, lithium borate, or lithium orthosilicate as a lithium-supplementing material, and the additive includes elemental sulfur, elemental selenium, selenium disulfide, elemental antimony, elemental tellurium, or elemental phosphorus as a reducing material; or the coating layer includes elemental sulfur as a reducing material, and the additive includes lithium metasilicate as a lithium-supplementing material.

As can be seen from the comparison between Examples 1-11 and Comparative Example 1, the secondary battery of the present application has the increased number of cycles and the prolonged service life as compared to the secondary battery of which the positive electrode plate without the addition of the lithium-supplementing material and reducing material.

As can be seen from the comparison between Examples 1-11 and Comparative Example 2, the secondary battery of the present application has the improved lithium-supplementing efficiency of the lithium-supplementing material, the increased number of cycles and the prolonged service life as compared to the secondary battery of which the positive electrode plate only including the lithium-supplementing material.

As can be seen from the comparison between Examples 1-11 and Comparative Example 3, the secondary battery of the present application has the reduced decomposition potential of the lithium-supplementing material, the improved lithium-supplementing efficiency of the lithium-supplementing material, the increased number of cycles and the prolonged service life as compared to the secondary battery of which the positive electrode plate having the lithium-supplementing material and reducing material present in the form of additives.

**Table 2**

| No. | Coating layer | Additive | Gas production of battery (mL/Ah) | Number of cycles of battery |
|---|---|---|---|---|
| Example 1 | Lithium metasilicate | Elemental sulfur | 0 | 6000 |
| Example 4 | Lithium orthosilicate | Elemental sulfur | 0 | 5850 |
| Example 6 | Lithium-rich lithium ferrite | Elemental sulfur | 25 | 5850 |

As can be seen from Table 2, the secondary battery of the present application has the reduced sheet resistance of the positive electrode plate, the improved lithium-supplementing efficiency of the lithium-supplementing material, the increased number of cycles and the prolonged service life as compared to the secondary battery in a core-shell structure with lithium metasilicate as the lithium-supplementing material and elemental sulfur as the reducing material.

**Table 3**

| | | | | | |
|---|---|---|---|---|---|
| No. | Coating layer | Additive | | | |

| | | | Sheet resistance of electrode plate /Ω | lithium-supplementing efficiency of lithium-supplementing material | Number of cycles of battery |
|---|---|---|---|---|---|
| Example 1 | Lithium metasilicate | Elemental sulfur | 0.080 | 100% | 6000 |
| Example 2 | Elemental sulfur | Lithium metasilicate | 0.080 | 97.0% | 5800 |
| Example 3 | Elemental sulfur | Lithium metasilicate | 0.080 | 94.0% | 5350 |
| Comparative Example 4 | Core-shell structure composed of lithium metasilicate and elemental sulfur | | 0.088 | 46.0% | 3800 |

As shown in Table 3, compared to the lithium-supplementing material of lithium-rich iron phosphate, the lithium-supplementing material using lithium metasilicate or lithium metasilicate can reduce the gas production of batteries, increase the number of cycles of the batteries, improve the cycling performance and safety performance of the batteries.

As can be seen from the comparison between Examples 1, 7-8, 10 and Example 9, and the comparison between Example 4 and Example 11, the reducing material including elemental selenium, elemental sulfur, selenium disulfide or metal oxide of sulfur such as calcium sulfide can further improve the lithium-supplementing efficiency of the lithium-supplementing material and improve the cycling performance of the batteries.

It should be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A secondary battery, comprising a positive electrode plate, wherein the positive electrode plate comprises a positive electrode active material and an additive, the positive electrode active material comprises a matrix material and a coating layer at least partially covering the matrix material; and
the coating layer comprises a lithium-supplementing material or a reducing material, the additive comprises a lithium-supplementing material or a reducing material, and the coating layer and the additive do not simultaneously comprise a lithium-supplementing material and do not simultaneously comprise a reducing material.

2. The secondary battery according to claim 1, wherein a mass ratio of the lithium-supplementing material to the reducing material is 0.5-50.

3. The secondary battery according to claim 1, wherein a mass ratio of the lithium-supplementing material to the reducing material is 1-20.

4. The secondary battery according to any one of claims 1 to 3, wherein based on mass of the matrix material, the mass fraction of the lithium-supplementing material is 0.5-20%.

5. The secondary battery according to any one of claims 1 to 3, wherein based on mass of the matrix material, the mass fraction of the lithium-supplementing material is 1-10%.

6. The secondary battery according to any one of claims 1 to 5, wherein based on the mass of the matrix material, the mass fraction of the reducing material is 0.01-10%.

7. The secondary battery according to any one of claims 1 to 5, wherein based on the mass of the matrix material, the mass fraction of the reducing material is 0.02-5%.

8. The secondary battery according to any one of claims 1 to 7, wherein the lithium-supplementing material comprises one or more of lithium nickelate, lithium-rich lithium nickelate, lithium ferrite, lithium-rich lithium ferrite, lithium oxalate, lithium oxalate, lithium metasilicate, lithium orthosilicate, lithium carbonate, lithium sulfate, lithium hydroxide, lithium phosphate, lithium oxide, lithium peroxide, lithium borate, or lithium metaborate.

9. The secondary battery according to any one of claims 1 to 7, wherein the lithium-supplementing material comprises one or more of lithium-rich lithium nickelate, lithium metasilicate, lithium orthosilicate, lithium sulfate, lithium hydroxide, lithium borate, lithium metaborate, and lithium phosphate.

10. The secondary battery according to any one of claims 1 to 9, wherein the reducing material comprises one or more of elemental selenium, a metallic compound of selenium, elemental sulfur, a metallic compound of sulfur, elemental phosphorus, a metallic compound of phosphorus, elemental boron, a metallic compound of boron, elemental tellurium, a metallic compound of tellurium, elemental antimony, a metallic compound of antimony, elemental bismuth, a metallic compound of bismuth, and selenium disulfide.

11. The secondary battery according to any one of claims 1 to 9, wherein the reducing material comprises one or more of elemental selenium, a metallic compound of selenium, elemental sulfur, a metallic compound of sulfur, and selenium disulfide.

12. The secondary battery according to any one of claims 1 to 11, wherein the lithium-supplementing material has a lithium-supplementing efficiency greater than or equal to 85%.

13. The secondary battery according to any one of claims 1 to 11, wherein the lithium-supplementing material has a lithium-supplementing efficiency of 90-100%.

14. A preparation method for a secondary battery, comprising the following steps:
applying a positive electrode slurry containing a positive electrode active material and an additive to obtain a positive electrode plate; and
assembling a negative electrode plate, a separator, an electrolyte, and the positive electrode plate to obtain a secondary battery;
wherein the positive electrode active material comprises a matrix material and a coating layer at least partially covering the matrix material;
wherein the coating layer comprises a lithium-supplementing material or a reducing material, the additive comprises a lithium-supplementing material or a reducing material, and the coating layer and the additive do not simultaneously comprise a lithium-supplementing material and do not simultaneously comprise a reducing material.

15. The preparation method according to claim 14, wherein a method of preparing the positive electrode active material specifically comprises:
subjecting a raw material for matrix material and a lithium-supplementing material precursor to a hydrothermal reaction to obtain a composite precursor; and
subjecting the composite precursor and a lithium source to a first sintering treatment to obtain a positive electrode active material;
wherein the positive electrode active material comprises a matrix material and a coating layer at least partially covering the matrix material, and the coating layer comprises a lithium-supplementing material.

16. The preparation method according to claim 15, wherein reaction temperature for the hydrothermal reaction is 120-220°C; and/or, reaction duration for the hydrothermal reaction is 8-24 hours.

17. The preparation method according to claim 15 or 16, wherein temperature for the first sintering treatment is 600-1000°C; and/or, duration for the first sintering treatment is 4-24 hours.

18. The preparation method according to claim 14, wherein a method of preparing the positive electrode active material specifically comprises:
subjecting a mixture containing a matrix material, a lithium-supplementing material precursor and a lithium source to a second sintering treatment to obtain a positive electrode active material;
wherein the positive electrode active material comprises a matrix material and a coating layer at least partially covering the matrix material, and the coating layer comprises a lithium-supplementing material.

19. The preparation method according to claim 18, wherein temperature for the second sintering treatment is 600-900°C; and/or, duration for the second sintering treatment is 4-24 hours.

20. The preparation method according to claim 14, wherein a method of preparing the positive electrode active material specifically comprises:
subjecting the matrix material and reducing material vapor to vapor-phase coating to obtain a positive electrode active material;
wherein the positive electrode active material comprises a matrix material and a coating layer at least partially covering the matrix material, and the coating layer comprises a reducing material.

21. The preparation method according to claim 20, wherein a mass ratio of the matrix material to the reducing material is 10:1000.

22. An electrical apparatus, comprising the secondary battery according to any one of claims 1 to 21.
